# EUROPÄISCHE PATENTSCHRIFT

(11) **EP 3 351 369 B1**
(45) Veröffentlichungstag und Bekanntmachung des Hinweises auf die Patenterteilung: **26.05.2021**
(21) Anmeldenummer: 18151703.8
(22) Anmeldetag: 15.01.2018
(51) Int. Cl.: B29C 70/02, B29C 70/30, B29B 11/16, B29C 43/34, D04H 1/732, B29C 41/36, D04H 1/22

(54) **DREIDIMENSIONALES FASERFORMTEIL, VORRICHTUNG UND VERFAHREN ZUR HERSTELLUNG EINES DREIDIMENSIONALEN FASERFORMTEILS**
THREE-DIMENSIONAL MOULDED FIBROUS PART, DEVICE AND METHOD FOR BUILDING A THREE-DIMENSIONAL MOULDED FIBROUS PART
PIÈCE FIBREUSE MOULÉE TRIDIMENSIONNELLE, DISPOSITIF ET PROCÉDÉ DE FABRICATION D'UNE PIÈCE FIBREUSE MOULÉE TRIDIMENSIONNELLE

(30) Priorität: 20.01.2017 DE 102017101128
(43) Veröffentlichungstag der Anmeldung: 25.07.2018
(73) Patentinhaber: Fiber Engineering GmbH, 76185 Karlsruhe (DE)
(72) Erfinder: Förster, Egon, 76744 Wörth (DE)
(74) Vertreter: Lemcke, Brommer & Partner Patentanwälte Partnerschaft mbB

(56) Entgegenhaltungen:
- DE-A1-102012 019 534
- GB-A- 1 493 547
- US-A- 5 213 747

## Beschreibung

### Beschreibung

Die Erfindung betrifft ein dreidimensionales Faserformteil gemäß dem Oberbegriff des Anspruchs 1, ein Verfahren zum Herstellen eines dreidimensionalen Faserformteils gemäß dem Oberbegriff des Anspruchs 7 sowie eine Vorrichtung zum Herstellen eines dreidimensionalen Faserformteils gemäß dem Oberbegriff des Anspruchs 12.

Bekannte dreidimensionale Faserformteile sind aus Fasern gebildet, die durch eine Luftströmung in eine mehrteilige gelochte Form eingeblasen werden. Die Fasern lagern sich an der Innenwand der Form an und werden untereinander durch Wärmezufuhr und/oder ein Bindemittel verbunden. Derartige Faserformteile haben den Vorteil, dass individuelle dreidimensionale Formen hergestellt werden können, die einerseits leicht, andererseits jedoch stabil sind. Dreidimensionale Faserformteile werden beispielsweise zur Schalldämmung, Wärmeisolierung oder in der Automobilindustrie eingesetzt. Dabei können die Faserformteile zur Verkleidung von Fahrzeuginnenräumen oder als Träger eingesetzt werden.

Üblicherweise sollen dabei möglichst großflächige einstückige Teile eingesetzt werden.

Derartige Faserformteile sind aus dem Stand der Technik, beispielsweise der DE 103 24 735 sowie der DE 10 2012 019 534 bekannt. Faserformteile sind weiterhin aus GB1493547 bekannt.

Alternativ sind aus dem Stand der Technik Airlaid-Verfahren bekannt zur Herstellung von Faservliesen. Bei diesen Verfahren werden die Fasern durch Walzen zu Faservliesen verpresst. Ein Hersteller dieser Anlagen ist beispielsweise die Firma Oerlikon

Nachteilig an den vorbekannten Faserformteilen aus dem Stand der Technik ist, dass diese leicht brennbar sind und eine schlechte Isolierwirkung, d. h. eine relativ hohe Wärmeleitfähigkeit aufweisen.

Der vorliegenden Erfindung liegt daher die Aufgabe zugrunde, ein dreidimensionales Faserformteil vorzuschlagen, das sich durch verbesserte Eigenschaften beispielsweise in Bezug auf die Isolierwirkung oder die Brennbarkeit auszeichnet.

Weiter ist es Aufgabe der Erfindung, ein Verfahren sowie eine Vorrichtung zum Herstellen eines solchen dreidimensionalen Faserformteils vorzuschlagen.

Gelöst wird diese Aufgabe durch ein dreidimensionales Faserformteil gemäß Anspruch 1 sowie durch ein Verfahren zum Herstellen eines dreidimensionalen Faserformteils gemäß Anspruch 7 und eine Vorrichtung zum Herstellen eines dreidimensionalen Faserformteils gemäß Anspruch 12. Bevorzugte Ausgestaltungen des erfindungsgemäßen dreidimensionalen Faserformteils finden sich in den Ansprüchen 2 bis 6. Bevorzugte Ausgestaltungen des erfindungsgemäßen Verfahrens finden sich in den Ansprüchen 8 - 11. Bevorzugte Ausgestaltungen der Erfindung gemäß der Vorrichtung finden sich in den Ansprüchen 13 - 15. Hiermit wird der Wortlaut sämtlicher Ansprüche explizit per Referenz in die Beschreibung einbezogen.

Das erfindungsgemäße dreidimensionale Faserformteil ist aus Fasern ausgebildet. Die Fasern sind erfindungsgemäß in eine Form eingeblasen und untereinander durch Wärmezufuhr und/oder ein Bindemittel verbunden worden.

Wesentlich ist, dass das Faserformteil zusätzlich ein mit den Fasern vermischtes Granulat aufweist.

Als Granulat im Rahmen der Erfindung ist granulare Materie zu verstehen, die üblicherweise als körniges Material mit Partikeln einer oder verschiedener Korngrößen vorliegt.

Durch den Einsatz eines Granulats, welches mit den Fasern vermischt ist, ergibt sich der Vorteil, dass Eigenschaften des dreidimensionalen Faserformteils, wie beispielsweise Wärmeleitfähigkeit, Brennbarkeit oder Isolierfähigkeit angepasst werden können. Vorzugsweise ist das Granulat nicht brennbar und/oder wasserabweisend und/oder ölabweisend.

Die Erfindung ist daher unter anderem in der Erkenntnis des Anmelders begründet, dass durch das Beimischen von Granulat die Eigenschaften dreidimensionaler Faserformteile beeinflusst werden können und so der Anwendungsbereich beispielsweise auf die Wärmeisolierung von Gebäuden und die Isolierung von Tunnelbauwerken im Straßenbau ausgeweitet werden kann. Die bisher in diesen Bereichen verwendeten Materialien wie Polystyrol (beispielsweise Styropor™) weisen zwar gute Wärmedämmwerte auf, sind jedoch brennbar und stellen daher insbesondere im Bereich der Gebäudeisolierung eine Gefahrenquelle dar. Alternativ oder zusätzlich können durch das Beimischen von Granulat spezielle Eigenschaften, beispielsweise in Bezug auf Tragfähigkeit, Wasser-, Öl- und/oder Hitzebeständigkeit, beeinflusst werden.

Dreidimensionale Faserformteile sind üblicherweise aus Fasern aus Viskose, Basalt, Glas, Silikat und/oder aus Mineralfasern ausgebildet. Für den Einsatz im Bereich der Wärmedämmung ist insbesondere die Verwendung von Mineralfasern vorteilhaft. Erfindungsgemäß ist das dreidimensionale Faserformteil formstabil.

Das erfindungsgemäße Verfahren zum Herstellen eines dreidimensionalen Faserformteils aus Fasermaterial umfasst die folgenden Verfahrensschritte:
A Bereitstellen einer zumindest zweiteiligen Form, deren Innenseite zumindest teilweise die Kontur des Faserformteils bestimmt;
B Einblasen von Fasern durch eine Luftströmung über eine erste Düse in die zumindest zweiteilige Form, wobei die Luft durch Öffnungen in der zumindest zweiteiligen Form entweicht, sodass sich die Fasern an den Innenseiten der zumindest zweiteiligen Form anlagern;
C Verbinden der Fasern untereinander durch Wärmezufuhr und/oder durch ein Bindemittel;
D Öffnen der zumindest zweiteiligen Form und Entnehmen des dreidimensionalen Faserformteils.

Wesentlich ist, dass in einem Verfahrensschritt E, parallel zu dem Verfahrensschritt B, ein Granulat in die zumindest zweiteilige Form zugeführt wird, sodass sich das Granulat mit den Fasern vermischt.

Vorzugsweise wird das Granulat mittels einer zweiten Düse in die zumindest zweiteilige Form eingeblasen. Dabei liegt es ebenso im Rahmen der Erfindung, dass das Granulat mittels der zweiten Düse der ersten Düse zugeführt wird und das Vermischen von Fasern und Granulat bereits vor dem Einblasen in die mehrteilige Form erfolgt.

Hierdurch ergibt sich der bereits beschriebene erfindungsgemäße Vorteil, dass Eigenschaften des dreidimensionalen Faserformteils in einfacher Art und Weise durch das Granulat bzw. die Wahl des entsprechenden Granulats, eingestellt werden können und mehr oder weniger unabhängig von der Wahl der Fasern sind.

Somit kann in einfacher und kostengünstiger Art und Weise bereits durch den Einsatz einer geringen Menge eines bestimmten Materials in Form des Granulats ein bedeutender Effekt erzielt werden. Der Großteil des Faserformteils wird weiterhin durch die vergleichsweise kostengünstigen Fasern gebildet.

In einer vorteilhaften Ausführungsform der Erfindung ist das dreidimensionale Faserformteil aus Fasern ausgebildet, die durch eine Luftströmung in eine mehrteilige gelochte Form eingeblasen und nach Ihrer Anlagerung an der Innenseite der Formwand durch Wärmezufuhr und/oder ein Bindemittel verbunden worden sind. Dadurch kann in einfacher Weise auf bereits bekannte Verfahren zur Herstellung des Faserformteils zurückgegriffen werden, die durch den erfindungsgemäßen Einsatz des Granulats optimiert werden.

Üblicherweise regelt das Verhältnis von Bindefaser/ Bindepulver zu den Fasern die Festigkeit des Bauteils, wie aus dem Stand der Technik bekannt. das Verhältnis von Granulat zu Faser hat maßgeblich Einfluss auf weitere Eigenschaften wie Brennbarkeit, Wärmeisolation usw.

Das Mischungsverhältnis zwischen Granulat und Fasergemisch liegt vorzugsweise zwischen 50:50 bis 80:20, bevorzugt 60:40 bis 70:30, insbesondere bevorzugt bei 60:40.

In einer bevorzugten Ausführungsform der Erfindung weist das Granulat einen Wärmedämmwert (λ-Wert) kleiner oder gleich 0,025 W/(m K), bevorzugt kleiner oder gleich 0,018 W/(m K) insbesondere bevorzugt kleiner oder gleich 0,016 W/(m K) auf.

Typische Polystyrolmaterialien zur Wärmeisolierung weisen einen Wärmedämmwert von 0,025 W/(m K) bis 0,04 W/(m K) auf. Aus dem Stand der Technik bekannte Faserformteile mit üblichen Fasergemischen weisen einen Wärmedämmwert von 0,033 W/(m K) auf. Für den erfindungsgemäßen Einsatz werden vorzugsweise Granulate eingesetzt mit einem Wärmedämmwert kleiner als 0,018 W/(m K) eingesetzt.

Vorzugsweise ist das Granulat nicht brennbar. Beispiele für nicht brennbares Granulat sind Aerogele aus Kieselsäure. Insbesondere vorteilhaft ist die Verwendung von hydrophober, synthetischer und amorpher Kieselsäure, die ähnliche chemische Eigenschaften wie andere Produkte aus amorpher Kieselsäure aufweist. Sie besteht in der Regel zu über 97 % aus hydrophober synthetischer amorpher Kieselsäure und im verbleibenden Masseanteil aus absorbiertem Wasser.

Untersuchungen der Anmelderin haben ergeben, dass sich insbesondere der Einsatz von Aerogelen als Granulat eignet. Aerogele sind üblicherweise nicht brennbar und weisen Korngrößen im Bereich von 0,1 bis 10mm auf.

Aerogele sind bekannte hochporöse Festkörper, die als gute Wärmeisolatoren bekannt sind. Dabei sind Aerogele typischerweise trotz ihres geringen Gewichts stabil und äußerst belastbar. Insbesondere Silikat-Aerogele zeigen eine sehr geringe Wärmeleitfähigkeit und eignen sich daher für den Einsatz als Dämmstoff. Der alleinige Einsatz von Aerogelen beispielsweise zur Wärmedämmung ist jedoch teuer und kommt daher nicht in großem Maßstab infrage.

Durch den Einsatz von Aerogelen als Granulat ergibt sich der Vorteil, dass das dreidimensionale Faserformteil nicht nur einen sehr guten Wärmedämmwert erreicht, sondern auch insgesamt schwer entflammbar, höchstvorzugsweise nicht brennbar ist und daher eine vergleichsweise kostengünstige Alternative für den Einsatz in der Gebäudeisolierung und in Hochrisikobereichen, wie beispielsweise in der Tunnelisolierung, darstellt.

Schwer entflammbar bedeutet im Rahmen dieser Beschreibung, dass die Anforderungen der Baustoffklasse B1 der DIN 4102-01 oder eine analoge Anforderung erfüllt sind. Nicht brennbar bedeutet im Rahmen dieser Beschreibung, dass zumindest die Anforderungen der Baustoffklasse A2 der DIN 4102-01 oder eine analoge Anforderung erfüllt sind.

Die erfindungsgemäßen bzw. erfindungsgemäß hergestellten Faserformteile sind formstabil, belastbar und hitzebeständig. Die bisher zur Isolierung in diesen Bereichen verwendeten Materialien wie Polystyrol (bspw. Styropor™) weisen zwar gute Wärmedämmwerte auf, sind jedoch brennbar und stellen daher insbesondere im Bereich der Gebäudeisolierung eine Gefahrenquelle dar. Denkbar ist auch ein Einsatz beispielsweise bei Offshore-Anwendungen.

Vorzugsweise weist das Granulat eine mittlere Korngröße größer als 100 µm, vorzugsweise größer als 1 mm, insbesondere bevorzugt zwischen 1 mm und 10 mm auf.

Bei diesen Korngrößen besteht bei den oben beschriebenen aus dem Stand der Technik bekannten Airlaid-Verfahren zur Herstellung von Faservliesen der Nachteil, dass das eingesetzte Granulat nicht mehr homogen im Faserteil verteilt wird und durch die Luftströmung an den Walzen herausgeblasen wird. Das erfindungsgemäße Verfahren vermeidet diese Nachteile und ermöglicht so den Einsatz auch von Granulat mit vergleichsweise großen Korngrößen, beispielsweise größer als 100 µm.

In einer bevorzugten Weiterbildung des erfindungsgemäßen Verfahrens wird das Granulat mittels einer zweiten Düse in die zumindest zweiteilige Form eingeblasen. Die Fasern werden durch die erste Düse in die Form eingeblasen, zusätzlich wird das Granulat mittels einer zweiten Düse in die Form eingeblasen. Dadurch erfolgt eine Vermischung von Fasern und Granulat. Vorzugsweise werden die Fasern und das Granulat jeweils mit separaten Düsen in die Form eingeblasen.

Durch das Einblasen erfolgt die Vermischung von Fasern und Granulat derart, dass das Granulat homogen verteilt wird und auch in dem fertigen Faserformteil eine homogene Verteilung des Granulats vorliegt. Dadurch werden beispielsweise Wärmebrücken oder instabile Bereiche im Faserformteil vermieden.

Vorzugsweise wird das Granulat mittels einer Düse nach dem Coandaprinzip (Coanda-Düse) eingeblasen. Die Coanda-Düse ist insbesondere für die oben beschriebenen Korngrößen geeignet und ermöglicht in einfacher Art und Weise ein Einblasen des Granulats in die Form.

Eine Coanda-Düse, auch bekannt als Luftstromverstärker, zeichnet sich dadurch aus, dass Druckluft in eine vielfach verstärkte Luftströmung umgewandelt werden kann, indem über den Coanda-Effekt Umgebungsluft mitgerissen und dadurch ein starker Austrittsluftstrom erzeugt wird.

Vorteilhaft an einer Coanda-Düse ist, dass die Coanda-Düse im Betriebszustand keine im Luftstrom befindlichen beweglichen Teile aufweist, wie z.B. bei einem konventionellen Lüfter. Dadurch werden Beschädigungen sowohl der Fasern als auch des Granulats vermieden.

In einer bevorzugten Ausgestaltung der Erfindung sind Dosiermittel zum dosierten Zuführen des Granulats vorgesehen. Mittels der Dosiermittel kann in einfacher Art und Weise das Verhältnis zwischen Fasern und Granulat im fertigen Faserformteil eingestellt werden. Vorzugsweise sind die Dosiermittel als eine motorbetriebene Dosierschnecke ausgebildet. Die Dosierschnecke ist vorzugsweise mit der Coanda-Düse zusammenwirkend angeordnet und ausgebildet. Die Coanda-Düse saugt das Granulat, insbesondere die einzelnen Körner, von der Dosierschnecke ab und transportiert diese in die Form.

Alternativ oder zusätzlich können beispielsweise auch Dosiermittel in Form einer motorbetriebene Zellenradschleuse vorgesehen sein.

Optional ist eine dritte Düse als Einblasdüse vorgesehen, die das Gemisch aus Fasern und Granulat in die mehrteilige Form einbläst. Die erste Düse zum Befördern der Fasern und die zweite Düse zum Befördern des Granulats sind in dieser Variante der Erfindung der Einblasdüse vorgeschaltet und sind jeweils über eine Zufuhr mit der Einblasdüse verbunden.

In einer alternativen Weiterbildung der Erfindung ist lediglich eine Düse zum Einblasen in die zumindest zweiteilige Form vorgesehen. Die Fasern werden durch die erste Düse in die Form eingeblasen. Dabei wird das Granulat über Dosiermittel wie beispielsweise eine motorbetriebene Dosierschnecke dem Luftstrom mit den Fasern vor der Düse zugeführt. Dadurch erfolgt eine Vermischung von Fasern und Granulat. Das Gemisch aus Fasern und Granulat wird dann über die eine Düse in die Form eingeblasen.

Vorzugsweise wird ein Fasergemisch, insbesondere bevorzugt aus einer Matrixfaser und einem Binder in Form von Bindefaser oder -pulver, eingeblasen. Die Matrixfaser kann wie bekannt aus Viskose, Basalt, Silikat und/oder Glas ausgebildet sein. Die Bindefaser ist üblicherweise aus einem Kunststoff und/oder einem Polymer, insbesondere bevorzugt einem Polyester/Copolyester ausgebildet. Das Bindepulver besteht beispielsweise aus einem PE Pulver, Acryllackpulver oder ähnlichen Bindeharzen.

Optional kann in einem Zwischenschritt vor dem Verbinden der Fasern untereinander ein Verpressen, d.h. eine Verdichtung der Fasern vorgenommen werden. Das Verpressen respektive die Verdichtung kann lokal erfolgen oder das gesamte Faserformteil betreffen. Hierzu kann beispielsweise eine Hilfsform aufgesetzt werden, die eine andere Innenkontur aufweist und somit zu einer lokal abweichenden Dichteverteilung führt. Auf die Details des Verfahrens, insbesondere in Bezug auf die Erzeugung einer inhomogenen Dichteverteilung, wird hiermit Bezug genommen.

Dies führt nach dem Verbinden der Fasern zu einer ungleichen Dichteverteilung der Fasern in dem fertigen Faserformteil, sodass beispielsweise bestimmte Bereiche verstärkt und mit einer höheren Tragfähigkeit ausgebildet werden können.

Das erfindungsgemäße dreidimensionale Faserformteil sowie die erfindungsgemäße Vorrichtung und das erfindungsgemäße Verfahren sind grundsätzlich für Anwendungen geeignet, bei denen dreidimensionale Faserformteile eingesetzt oder hergestellt werden, die spezielle Eigenschaften, beispielsweise in Bezug auf Tragfähigkeit, Wärmedämmung, Isolierung, Brennbarkeit, Öl und/oder Hitzebeständigkeit aufweisen sollen.

Das erfindungsgemäße Faserformteil ist daher vorzugsweise ausgebildet zur Verwendung in der Wärmeisolierung. Dazu sollte als Granulat ein Aerogel mit einem Wärmedämmwert von ungefähr 0,018 W/m K oder kleiner verwendet werden. Als Fasern werden Viskose/Silicat-, Basalt-, Glas- oder reine Silicat-Fasern eingesetzt. Diese sind schwer entflammbar (Viskose-Silikat-Fasern) beziehungsweise nicht brennbar (Basalt-, Glas- oder reine Silicat-Fasern). Im Ergebnis ist das fertige dreidimensionale Faserformteil ebenso schwer entflammbar beziehungsweise nicht brennbar und kann daher in vorteilhafter Art und Weise bei der Isolierung von Gebäuden, im Tunnelbau oder Ähnlichem eingesetzt werden. Hier sind Eigenschaften wie eine gute Wärmeisolierung und Nichtbrennbarkeit des Materials von maßgeblicher Bedeutung.

Weitere Merkmale und Vorteile der Erfindung ergeben sich aus den Zeichnungen und der folgenden Beschreibung anhand von Ausführungsbeispielen. Dabei zeigt:
- Figur 1: eine schematische Darstellung eines Ausführungsbeispiels eines erfindungsgemäßen dreidimensionalen Faserformteils;
- Figur 2: eine schematische Darstellung eines ersten Ausführungsbeispiels einer erfindungsgemäßen Vorrichtung zur Herstellung eines dreidimensionalen Faserformteils;
- Figur 3: eine schematische Darstellung eines zweiten Ausführungsbeispiels zur Herstellung eines erfindungsgemäßen Faserformteils.

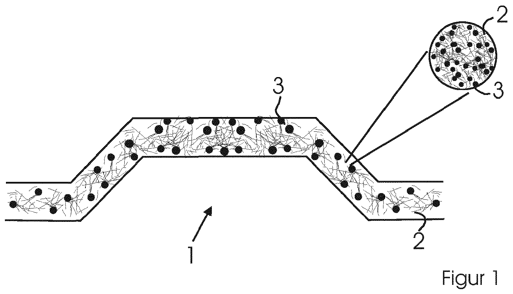

In den Figuren 1 - 4 bezeichnen gleiche Bezugszeichen gleiche oder gleichwirkende Elemente.

Figur 1 zeigt eine schematische Darstellung eines erfindungsgemäßen dreidimensionalen Faserformteils. Das Faserformteil 1 ist aus verbundenen Fasern ausgebildet, vorliegend aus einem Fasergemisch 2. Das Fasergemisch besteht aus einer Matrixfaser, vorliegend Viskose-Silikatfasern und einer bikomponenten Faser als Bindefaser.

Vorliegend ist das dreidimensionale Faserformteil 1 aus Fasern 2 ausgebildet, die durch eine Luftströmung in eine mehrteilige gelochte Form eingeblasen und nach Ihrer Anlagerung an der Innenseite der Formwand durch die Bindefaser zu dem dreidimensionalen Faserformteil 1 verbunden sind.

Zwischen den Fasern sind homogen Granulatpartikel 3 angeordnet. Vorliegend ist das Granulat 3 ein Silikat-Aerogel mit einem Wärmedämmwert von mindestens 0,018 W/m K .

Das Mischungsverhältnis zwischen Granulat und Fasergemisch liegt vorliegend bei 60:40.

Das fertige Faserformteil hat beispielsweise einen Wärmedämmwert von 0,021 W/m K .Dieser Wärmedämmwert ist kleiner als für übliche PolystyrolMaterialien. Das fertige Faserformteil ist hingegen jedoch nicht brennbar.

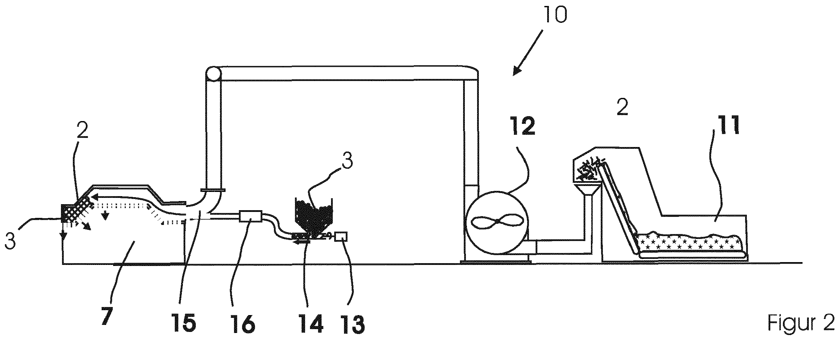

Figur 2 zeigt eine schematische Darstellung einer Ausführungsform einer Vorrichtung 10 zur Herstellung eines dreidimensionalen Faserformteils.

Die Vorrichtung umfasst ein Faserreservoir 11, das ein Fasergemisch 2 aufweist.

In Wirkverbindung mit dem Faserreservoir 11 ist ein Transportventilator 12 vorgesehen. Faserreservoir 11 und Transportventilator 12 sind über Röhren miteinander verbunden.

Weiter ist als erste Düse eine Einblasdüse 15 zum Einblasen der Fasern in eine mehrteilige Form 17 vorgesehen.

Die Einblasdüse 15 ist als Linear-, Schwenk- oder starre Düse ausgebildet.

Die Einblasdüse 15 mündet in die mehrteilige Form 17, die vorliegend als Oberform 17a und Unterform 17b ausgebildet ist. Von dem Transportventilator 12 sind Röhren zu der Einblasdüse 15 vorgesehen.

Die Vorrichtung 10 umfasst weiter einen Vorratsbehälter 14 für das Granulat 3. An dem Vorratsbehälter 14 ist eine motorbetriebene Dosierschnecke 13 angeordnet. Zum Betrieb der Dosierschnecke 13 ist ein Elektromotor vorgesehen.

In Wirkverbindung mit dem Vorratsbehälter 14 ist eine zweite Düse 16 für das Granulat 3 vorgesehen. Die zweite Düse 16 ist vorliegend als Coanda-Düse ausgebildet.

Der Transportventilators 12 erzeugt einen Luftstrom, mittels dessen die Fasern des Fasergemisches 2 aus dem Vorratsbehälter 11 zu der Einblasdüse 15 transportiert werden. Mittels der Einblasdüse 15 werden die Fasern in die mehrteilige Form 17 eingeblasen.

Zusätzlich wird parallel mittels der Dosierschnecke 13 aus dem Vorratsbehälter 14 das Granulat 3 der zweiten Düse 16 zugeführt. Die zweite Düse 16 saugt das Granulat 3 von der Dosierschnecke ab und transportiert die Granulatpartikel zu der Einblasdüse 15.

Die Einblasdüse 16 bläst das Fasergemisch zusammen mit dem Granulat 3 in mehrteilige Form 17. Dies sorgt für eine homogene Vermischung von Fasern 2 und Granulat 3.

Die mehrteilige Form 17 ist vorliegend zweiteilig ausgebildet und besteht aus einer Oberform und einer Unterform. Die Innenwand der Form bestimmt die spätere Kontur des Faserformteils.

Vorliegend ist die Form mit Öffnungen ausgebildet, durch die die eingeblasene Luft entweichen kann. Dabei lagern sich die Fasern 2 zusammenmit dem Granulat 3 an der Innenseite der mehrteiligen Form 17 an. Dabei ist die Innenwand der mehrteiligen Form 17 derart ausgebildet, dass sie zumindest teilweise die spätere Kontur des Faserformteils 1 mitbestimmt.

Optional kann vor dem Verbinden der Fasern 3 ein Verpressen der eingeblasenen Fasern 3 erfolgen. Hierzu kann beispielsweise eine Hilfsform aufgesetzt werden, die eine andere Innenkontur aufweist und somit zu einer lokal abweichenden Dichteverteilung führt.

Zum Verbinden der Fasern 3 kann beispielsweise mittels Wärmezufuhr ein Bindemittel oder eine Bindefaser aufgeschmolzen werden, sodass sich die Fasern 2 untereinander und mit den Granulatpartikeln 3 verbinden.

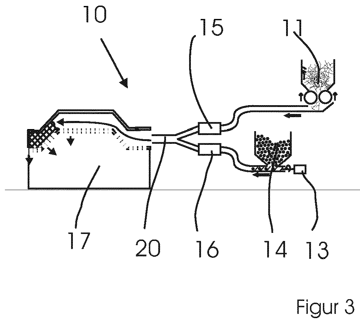

Figur 3 zeigt eine schematische Darstellung eines zweiten Ausführungsbeispiels einer erfindungsgemäßen Vorrichtung zum Herstellen eines dreidimensionalen Faserformteils.

Zur Vermeidung von Wiederholungen soll im Folgenden lediglich auf die Unterschiede zu Figur 1 angegangen werden.

Vorliegend sind zwei Coanda-Düsen als erste Düse 15 und als zweite Düse 16 vorgesehen. Zusätzlich ist eine dritte Düse 20 als Einblasdüse vorgesehen.

Das Fasergemisch 2 wird mittels der ersten Düse 15 zu der Einblasdüse 20 transportiert. Ein Transportventilator 12, wie zu Figur 2 beschrieben, ist hier also nicht erforderlich.

Das Granulat wird mittels der zweiten Düse 16 zu der Einblasdüse 20 transportiert. Fasern 2 und Granulat 3 werden also hinter der ersten Düse 15 und der zweiten Düse 16, welche jeweils als Coanda-Düsen ausgebildet sind, gemischt und das Gemisch mit der Einblasdüse 20 in die mehrteilige Form 17 eingeblasen.

## Patentansprüche

1. Dreidimensionales Faserformteil aufweisend Fasern (2), die in eine Form (17) eingeblasen und untereinander durch Wärmezufuhr und/oder ein Bindemittel verbunden worden sind,
**dadurch gekennzeichnet,**
**dass** das Faserformteil (1) zusätzlich ein mit den Fasern (2) vermischtes Granulat (3) aufweist, welches Granulat eine mittlere Korngröße größer als 100 um aufweist.

2. Dreidimensionales Faserformteil nach Anspruch 1,
**dadurch gekennzeichnet,**
**dass** das Granulat (3) einen Wärmeleitwert kleiner oder gleich 0,020 W/(m K), bevorzugt kleiner oder gleich 0,018 W/(m K) insbesondere bevorzugt kleiner oder gleich 0,016 W/(m K) aufweist.

3. Dreidimensionales Faserformteil nach einem der vorangegangenen Ansprüche,
**dadurch gekennzeichnet,**
**dass** das Granulat (3) nicht brennbar und/oder wasserabweisend und/oder ölabweisend ist.

4. Dreidimensionales Faserformteil nach einem der vorangegangenen Ansprüche,
**dadurch gekennzeichnet,**
**dass** das Granulat (3) eine mittlere Korngröße größer als 1 mm, insbesondere bevorzugt zwischen 1 mm und 10 mm aufweist.

5. Dreidimensionales Faserformteil nach einem der vorangegangenen Ansprüche,
**dadurch gekennzeichnet,**
**dass** das Granulat (3) homogen verteilt ist.

6. Dreidimensionales Faserformteil nach einem der vorangegangenen Ansprüche,
**dadurch gekennzeichnet,**
**dass** das Granulat (3) ein Aerogel ist, bevorzugt ein Silikat-Aerogel, insbesondere bevorzugt aus synthetischer, amorpher Kieselsäure.

7. Verfahren zum Herstellen dreidimensionaler Faserformteile (1) aus Fasermaterial (2) folgende Verfahrensschritte umfassend:
A Bereitstellen einer zumindest zweiteiligen Form (17), deren Innenseite zumindest teilweise die Kontur des Faserformteils (1) bestimmt,
B Einblasen von Fasern (2) durch eine Luftströmung über eine erste Düse (15) in die zumindest zweiteilige Form (17), wobei die Luft durch Öffnungen in der zumindest zweiteiligen Form (17) entweicht, sodass sich die Fasern (2) an den Innenseiten der zumindest zweiteiligen Form (17) anlagern;
C Verbinden der Fasern (2) untereinander durch Wärmezufuhr und/oder durch ein Bindemittel;
D Öffnen der zumindest zweiteiligen Form (17) und Entnehmen des dreidimensionalen Faserformteils (1);
**dadurch gekennzeichnet,**
**dass** in einem Verfahrensschritt E parallel zu dem Verfahrensschritt B ein Granulat (3) in die zumindest zweiteilige Form (17) zugeführt wird, sodass sich das Granulat (3) mit den Fasern (2) vermischt.

8. Verfahren nach Anspruch 7,
**dadurch gekennzeichnet,**
**dass** das Granulat (3) mittels einer Düse (15, 16, 20) in die zumindest zweiteilige Form (17) eingeblasen wird, vorzugsweise mittels einer Düse nach dem Coanda-Prinzip.

9. Verfahren nach einem der vorangegangenen Ansprüche 7 oder 8,
**dadurch gekennzeichnet,**
**dass** die Fasern (2) und das Granulat mittels zweier separater Düsen (15, 16, 20) in die Form (17) eingeblasen werden.

10. Verfahren nach einem der vorangegangenen Ansprüche 7 bis 9,
**dadurch gekennzeichnet,**
**dass** als Granulat (3) Partikel mit einer mittleren Korngröße größer als 100 µm, vorzugsweise größer als 1 mm, insbesondere bevorzugt zwischen 1 mm und 10 mm eingeblasen werden.

11. Verfahren nach einem der vorangegangenen Ansprüche 7 bis 10,
**dadurch gekennzeichnet,**
**dass** als Granulat (3) ein Aerogel, vorzugsweise aus synthetischer und amorpher Kieselsäure eingeblasen wird.

12. Vorrichtung zum Herstellen dreidimensionaler Faserformteile aus Fasermaterial, umfassend
- eine zumindest zweiteilige Form (17), die Öffnungen aufweist und deren Innenseite zumindest teilweise die Kontur des Faserformteils (1) bestimmt,
- ein Gebläse mit einer ersten Düse (15, 16, 20) zum Einblasen der Fasern in die zumindest zweiteilige Form (17), wobei Luft durch die Öffnungen der zumindest zweiteiligen Form (17) entweicht, so dass sich die Fasern (2) an der Innenseite der zumindest zweiteiligen Form anlagern,
- Mittel zum Verbinden der Fasern (2) durch Wärmezufuhr und/oder Kleberzufuhr,
**dadurch gekennzeichnet,**
**dass** Zuführmittel (13, 14, 16) vorgesehen sind zum Zuführen von Granulat (3) in die zumindest zweiteilige Form (17), sodass sich das Granulat (3) mit den Fasern (2) vermischt.

13. Vorrichtung nach Anspruch 12,
**dadurch gekennzeichnet,**
**dass** eine zweite Düse (16), vorzugsweise eine Coanda-Düse, vorgesehen ist zum Einblasen des Granulats (3) in die zumindest zweiteilige Form (17).

14. Vorrichtung nach einem der vorangegangenen Ansprüche 12 oder 13,
**dadurch gekennzeichnet,**
**dass** Dosiermittel (13, 14) zum dosierten Zuführen des Granulats (3) vorgesehen sind, vorzugsweise eine motorbetriebene Dosierschnecke (13, 14) und/oder eine motorbetriebene Zellenradschleuse.

15. Vorrichtung nach einem der vorangegangenen Ansprüche 12 bis 14,
**dadurch gekennzeichnet,**
**dass** die Vorrichtung (10), insbesondere die Dosiermittel (13, 14) und/oder die zweite Düse (16), ausgebildet ist zum Einblasen des Granulats (3) in Form von Partikeln mit einer mittleren Korngröße größer als 100 µm, vorzugsweise größer als 1 mm, insbesondere bevorzugt zwischen 1 mm und 10 mm eingeblasen werden.

## Claims

1. Three-dimensional moulded fibre part comprising fibres (2) which have been blown into a mould (17) and bonded to one another by supplying heat and/or by means of a binder,
**characterised in that**
the moulded fibre part (1) additionally comprises granules (3) mixed with the fibres (2), which granules have an average particle size greater than 100 µm.

2. Three-dimensional moulded fibre part according to claim 1,
**characterised in that**
the granules (3) have a thermal conductivity coefficient of less than or equal to 0.020 W/(mK), preferably less than or equal to 0.018 W/(mK), especially preferably less than or equal to 0.016 W/(mK).

3. Three-dimensional moulded fibre part according to either one of the preceding claims,
**characterised in that**
the granules (3) are non-combustible and/or water-repellent and/or oil-repellent.

4. Three-dimensional moulded fibre part according to any one of the preceding claims,
**characterised in that**
the granules (3) have an average particle size greater than 1 mm, especially preferably between 1 mm and 10 mm.

5. Three-dimensional moulded fibre part according to any one of the preceding claims,
**characterised in that**
the granules (3) are homogeneously distributed.

6. Three-dimensional moulded fibre part according to any one of the preceding claims,
**characterised in that**
the granules (3) are an aerogel, preferably a silicate aerogel, especially preferably made of synthetic, amorphous silica.

7. Method of producing three-dimensional moulded fibre parts (1) made of fibre material (2), comprising the following method steps:
A provision of an at least two-part mould (17), the inner side of which at least to some extent determines the contours of the moulded fibre part (1),
B blowing of fibres (2) into the at least two-part mould (17) by means of an airflow via a first nozzle (15), the air escaping through openings in the at least two-part mould (17), so that the fibres (2) are deposited on the inner sides of the at least two-part mould (17);
C bonding of the fibres (2) to one another by supplying heat and/or by means of a binder;
D opening of the at least two-part mould (17) and removal of the three-dimensional moulded fibre part (1);
**characterised in that**
in a method step E, in parallel with method step B, granules (3) are supplied to the at least two-part mould (17), so that the granules (3) become mixed with the fibres (2).

8. Method according to claim 7,
**characterised in that**
the granules (3) are blown into the at least two-part mould (17) by means of a nozzle (15, 16, 20), preferably by means of a nozzle in accordance with the Coandǎ principle.

9. Method according to either one of preceding claims 7 and 8,
**characterised in that**
the fibres (2) and the granules are blown into the mould (17) by means of two separate nozzles (15, 16, 20).

10. Method according to any one of preceding claims 7 to 9,
**characterised in that**,
as granules (3), particles having an average particle size greater than 100 µm, preferably greater than 1 mm, especially preferably between 1 mm and 10 mm, are blown in.

11. Method according to any one of preceding claims 7 to 10,
**characterised in that**,
as granules (3), an aerogel, preferably made of synthetic and amorphous silica, is blown in.

12. Device for producing three-dimensional moulded fibre parts made of fibre material, comprising
- an at least two-part mould (17) which has openings and the inner side of which at least to some extent determines the contours of the moulded fibre part (1),
- a blower having a first nozzle (15, 16, 20) for blowing the fibres into the at least two-part mould (17), the air escaping through the openings of the at least two-part mould (17), so that the fibres (2) are deposited on the inner side of the at least two-part mould,
- means for bonding the fibres (2) by supplying heat and/or supplying adhesive,
**characterised in that**
supply means (13, 14, 16) are provided for supplying granules (2) to the at least two-part mould (17), so that the granules (3) become mixed with the fibres (2).

13. Device according to claim 12,
**characterised in that**
a second nozzle (16), preferably a Coandǎ nozzle, is provided for blowing the granules (3) into the at least two-part mould (17).

14. Device according to either one of preceding claims 12 and 13,
**characterised in that**
metering means (13, 14) for metered supplying of granules (3) are provided, preferably a motor-driven metering screw (13, 14) and/or a motor-driven rotary feeder.

15. Device according to any one of preceding claims 12 to 14,
**characterised in that**
the device (10), especially the metering means (13, 14) and/or the second nozzle (16), is designed to blow in the granules (3) in the form of particles having an average particle size greater than 100 µm, preferably greater than 1 mm, especially preferably between 1 mm and 10 mm.

## Revendications

1. Pièce moulée fibreuse tridimensionnelle comprenant des fibres (2), qui ont été injectées dans un moule (17) et reliées les unes aux autres par apport de chaleur et/ou par un liant,
**caractérisée en ce que**
la pièce moulée fibreuse (1) comprend en outre un granulat (3) mélangé avec les fibres (2), ledit granulat présentant une taille de grain moyenne supérieure à 100 µm.

2. Pièce moulée fibreuse tridimensionnelle selon la revendication 1, **caractérisée en ce que** le granulat (3) présente une valeur de conductivité thermique inférieure ou égale à 0,020 W/(m K), de préférence inférieure ou égale à 0,018 W/(m K), de manière particulièrement préférée inférieure ou égale à 0,016 W/(m K).

3. Pièce moulée fibreuse tridimensionnelle selon l'une quelconque des revendications précédentes, **caractérisée en ce que** le granulat (3) est non combustible et/ou hydrophobe et/ou oléophobe.

4. Pièce moulée fibreuse tridimensionnelle selon l'une quelconque des revendications précédentes, **caractérisée en ce que** le granulat (3) présente une taille de grain moyenne supérieure à 1 mm, de manière particulièrement préférée comprise entre 1 mm et 10 mm.

5. Pièce moulée fibreuse tridimensionnelle selon l'une quelconque des revendications précédentes, **caractérisée en ce que** le granulat (3) est réparti de manière homogène.

6. Pièce moulée fibreuse tridimensionnelle selon l'une quelconque des revendications précédentes, **caractérisée en ce que** le granulat (3) est un aérogel, de préférence un aérogel de silicate, de manière particulièrement préférée en silice amorphe synthétique.

7. Procédé de fabrication de pièces moulées fibreuses tridimensionnelles (1) en matériau fibreux (2) comprenant les étapes de procédé suivantes :
A la fourniture d'un moule au moins à deux parties (17), dont le côté intérieur détermine au moins partiellement le contour de la pièce moulée fibreuse (1),
B l'injection de fibres (2) par un courant d'air par l'intermédiaire d'une première buse (15) dans le moule au moins à deux parties (17), l'air s'échappant par des ouvertures dans le moule au moins à deux parties (17),
de telle sorte que les fibres (2) se déposent sur les côtés intérieurs du moule au à moins deux parties (17) ;
C la liaison des fibres (2) les unes aux autres par apport de chaleur et/ou par un liant ;
D l'ouverture du moule au moins à deux parties (17) et l'extraction de la pièce moulée fibreuse tridimensionnelle (1) ;
**caractérisé en ce que**
dans une étape de procédé E parallèle à l'étape de procédé B, un granulat (3) est introduit dans le moule au à moins deux parties (17), de telle sorte que le granulat (3) se mélange avec les fibres (2).

8. Procédé selon la revendication 7, **caractérisé en ce que** le granulat (3) est injecté au moyen d'une buse (15, 16, 20) dans le moule au moins à deux parties (17), de préférence au moyen d'une buse selon le principe Coanda.

9. Procédé selon l'une quelconque des revendications 7 ou 8 précédentes, **caractérisé en ce que** les fibres (2) et le granulat sont injectés au moyen de deux buses séparées (15, 16, 20) dans le moule (17).

10. Procédé selon l'une quelconque des revendications 7 à 9 précédentes, **caractérisé en ce qu'**en tant que granulat (3), des particules ayant une taille de grain moyenne supérieure à 100 µm, de préférence supérieure à 1 mm, de manière particulièrement préférée comprise entre 1 mm et 10 mm, sont injectées.

11. Procédé selon l'une quelconque des revendications 7 à 10 précédentes, **caractérisé en ce qu'**en tant que granulat (3), un aérogel, de préférence en silice synthétique et amorphe, est injecté.

12. Dispositif pour la fabrication de pièces moulées fibreuses tridimensionnelles en matériau fibreux, comprenant :
- un moule au moins à deux parties (17), qui comprend des ouvertures et dont le côté intérieur détermine au moins partiellement le contour de la pièce moulée fibreuse (1),
- un ventilateur muni d'une première buse (15, 16, 20) pour l'injection des fibres dans le moule au moins à deux parties (17), l'air s'échappant par les ouvertures du moule au moins à deux parties (17), de telle sorte que les fibres (2) se déposent sur le côté intérieur du moule au moins à deux parties,
- des moyens pour la liaison des fibres (2) par apport de chaleur et/ou par apport d'adhésif,
**caractérisé en ce que**
des moyens d'introduction (13, 14, 16) sont prévus pour l'introduction d'un granulat (3) dans le moule au moins à deux parties (17), de telle sorte que le granulat (3) se mélange avec les fibres (2).

13. Dispositif selon la revendication 12, **caractérisé en ce qu'**une deuxième buse (16), de préférence une buse Coanda, est prévue pour l'injection du granulat (3) dans le moule au moins à deux parties (17).

14. Dispositif selon l'une quelconque des revendications 12 ou 13 précédentes, **caractérisé en ce que** des moyens de dosage (13, 14) pour l'introduction dosée du granulat (3) sont prévus, de préférence une vis de dosage motorisée (13, 14) et/ou une vanne rotative motorisée.

15. Dispositif selon l'une quelconque des revendications 12 à 14 précédentes, **caractérisé en ce que** le dispositif (10), notamment les moyens de dosage (13, 14) et/ou la deuxième buse (16), est configuré pour l'injection du granulat (3) sous la forme de particules ayant une taille de grain moyenne supérieure à 100 µm, de préférence supérieure à 1 mm, de manière particulièrement préférée comprise entre 1 mm et 10 mm.
